# FASCICULE DE BREVET EUROPEEN

(11) **EP 0 778 518 B1**
(45) Date de publication et mention de la délivrance du brevet: **19.01.2000**
(21) Numéro de dépôt: 96470022.3
(22) Date de dépôt: 27.11.1996
(51) Int. Cl.: G06F 7/72

(54) **Procédé de production d'un paramètre J0 associé à la mise en oeuvre d'opérations modulaires selon la méthode de Montgomery**
Verfahren zum Erzeugen eines Parameters J0 bezüglich der Verwendung von modularen Operationen nach der Montgomery-Methode
Method of producing a parameter J0 associated with the implementation of modular operations according to the Montgomery method

(30) Priorité: 04.12.1995 FR 9514614
(43) Date de publication de la demande: 11.06.1997
(73) Titulaire: STMicroelectronics S.A., 94250 Gentilly (FR)
(72) Inventeur: Monier, Guy, 57000 Metz (FR)
(74) Mandataire: Schmit, Christian Norbert Marie

(56) Documents cités:
- EP-A- 0 502 782
- EP-A- 0 601 907
- COMPUTER JOURNAL, vol. 37, no. 3, 1994, LONDON GB, pages 219-222, XP000448174 B. ARAZI: "On Primality Testing Using Purely Divisionless Operations"
- IEEE JOURNAL ON SELECTED AREAS IN COMMUNICATIONS, vol. 11, no. 5, 1 Juin 1993, pages 761-769, XP000399844 ARAZI B: "DOUBLE-PRECISION MODULAR MULTIPLICATION BASED ON A SINGLE-PRECISION MODULAR MULTIPLIER AND A STANDARD CPU"

## Description

L'invention concerne un procédé de production d'un paramètre de calcul intervenant dans la mise en oeuvre d'opérations modulaires selon la méthode de Montgomery. Les opérations modulaires selon la méthode de Montgomery permettent d'effectuer des calculs modulaires dans un corps fini GF(2ⁿ) (corps de Gallois de 2ⁿ éléments) sans effectuer de division.

Classiquement, les opérations modulaires sur GF(2ⁿ) sont utilisées en cryptographie pour des applications telles que l'authentification de messages, l'identification d'un utilisateur et l'échange de clés. De tels exemples d'applications sont décrits par exemple dans la demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié à la mise en oeuvre de calculs modulaires. Le coprocesseur utilisé permet de traiter des multiplications modulaires, en utilisant la méthode de Montgomery. Il fait l'objet d'une demande de brevet européen, publiée sous la référence 0 601 907 A3, et est illustré figure 2 (cette figure correspondant à la figure 2 de la demande de brevet européen citée).

La méthode de montgomery permet le calcul de l'opération de base, dite P_{fieid}. Cette opération de base consiste, à partir de trois données binaires, A (multiplicande), B (multiplieur inférieur à N) et N (modulo) un entier impair, codées sur un nombre entier n de bits, à produire une donnée binaire notée P_{field} (A, B)_{N}, codée sur n bits, telle que P_{field} (A, B)_{N} = A * B * I mod N, avec I = 2⁻ⁿ mod N.

Classiquement, n est égal à 256, 512, et dans un futur très proche 1024. Pour la résolution de l'opération P_{field}, on utilise une base de travail, c'est à dire que certains des calculs nécessaires à la résolution s'effectuent sur Bt bits au lieu de n bits, par exemple Bt = 32. On note qu'il existe un entier k tel que k * Bt ≥ n > (k - 1) * Bt. L'utilisation d'une base de travail permet de réduire la surface des circuits de calcul, surtout des circuits de multiplication, tout en gardant une vitesse de traitement intéressante.

Pour la résolution de l'opération P_{field}(A, B)_{N} = S, un algorithme très utilisé fait appel aux variables suivantes:
- A un entier codé sur n bits et décomposé en k mots de Bt bits notés A₀ à Aₖ₋₁,
- B un entier codé sur n bits et représenté sur un mot de (k * Bt) bits,
- N un entier impair codé sur n bits et représenté sur un mot de (k * Bt) bits. On notera N₀ le mot de Bt bits correspondant aux Bt bits de poids faible de N,
- S(i) un entier codé sur (k * Bt) + 1 bits représentant une valeur actualisée du résultat S pendant une itération i,
- X et Z deux entier codé sur ((k + 1) * Bt) + 1 bits,
- Y₀ un entier codé sur Bt bits
- J₀ un entier codé sur Bt bits et tel que ((J₀ * N₀) + 1) mod 2^{Bt} = 0

L'algorithme mathématique qui est transposable aussi bien sur un circuit intégré que sur un traitement logiciel est le suivant:
- mise à 0 de S(0),
- mise en oeuvre d'une boucle indicé par i, i variant de 1 à k:
   B1: calcul de X = S(i-1) + (B * Aᵢ₋₁),
   B2: calcul de Y = (X * J₀) mod 2^{Bt}, où l'opération mod 2^{Bt} ne correspond qu'à une troncature,
   B3: calcul de Z = X + (Y * N),
   B4: calcul de S(i) = Z \ 2^{Bt}, où le symbole \ représente une division entière,
   B5: si S(i) est supérieur à N alors on soustrait N à S(i),
- on peut récupérer le résultat S = S(k) = P_{field}(A, B)_{N}.

En cryptographie, lors du codage (ou du décodage) d'un message, on utilise de nombreuses fois ce type d'opération. Il est donc d'un grand intérêt de réaliser cet algorithme le plus rapidement possible. Dans le temps de calcul intervient le temps de calcul du paramètre J₀. Actuellement, diverses méthodes de calcul théorique sont connues pour son calcul, il existe par exemple un algorithme d'Euclide étendu et également un algorithme de Stein étendu, il existe également une méthode par exponentiation modulaire et une autre méthode utilisant une division modulaire. Ces méthodes ne sont pas directement portables sur des circuits intégrés et le calcul de ce paramètre J₀ se fait classiquement de manière logicielle avec l'aide d'un coprocesseur arithmétique.

La demande de brevet EP-A-0 502 782 dévoile des circuits dédiés à des calculs modulaires. EP-A-0 502 782 dévoile, entre autre, un circuit de calcul à architecture parallèle dédié au calcul du paramètre J₀ associé à la méthode de Montgomery.

L'invention propose ainsi un premier procédé de production dans un coprocesseur d'arithmétique modulaire d'un circuit intégré d'un paramètre J₀ associé à la mise en oeuvre d'opération modulaire selon la méthode de Montgomery, le coprocesseur comportant des registres à décalage de Bt et de k*Bt bits, des circuits d'addition et de soustraction série, un circuit de test et d'autres moyens pour réaliser des opérations modulaires selon la méthode de Montgomery, caractérisé en ce que J₀ est codé sur Bt bits et tel que ((J₀*N₀)+1)mod 2^{Bt} = 0, N₀ étant une information codée sur Bt bits, et en ce que l'on effectue les étapes suivantes:
E1: chargement de l'information N₀, le bit de poids faible de N₀ étant égal à 1, dans un premier et un troisième registre de Bt bits,
E2: chargement d'un 1 sur le bit de poids fort d'un deuxième registre de Bt bits,
E3: mise en oeuvre d'une boucle, indicée par i, i variant de 1 à Bt - 1, chaque itération comprenant les étapes suivantes:
   B1: on décale le contenu du premier registre d'une unité vers la droite ,
   B2: on teste le bit de poids le plus faible du premier registre :
      T1: si le bit testé est égal à 1, alors on décale le contenu du deuxième registre d'une unité vers la droite et on charge un 0 sur le bit de poids fort,
      T2: si le bit testé est égal à 0, alors on décale le contenu du deuxième registre d'une unité vers la droite et on charge un 1 sur le bit de poids fort, on additionne bit à bit le contenu des premier et troisième registres dans un additionneur, une sortie de l'additionneur étant reliée à une entrée du premier registre, une sortie du troisième registre étant bouclée sur son entrée,
E4: le deuxième registre contient le paramètre J₀ désiré.

L'invention propose aussi un procédé de production dans un coprocesseur d'arithmétique modulaire d'un paramètre J₀ associé à la mise en oeuvre d'opération modulaire selon la méthode de Montgomery, le coprocesseur comportant des registres à décalage de Bt et de k*Bt bits, des circuits d'addition et de soustraction série, un circuit de test et d'autres moyens pour réaliser des opérations modulaires selon la méthode de Montgomery, caractérisé en ce que J₀ est codé sur Bt bits et tel que ((J₀*N₀)+1)mod 2^{Bt} = 0, N₀ étant une information codée sur Bt bits, et en ce que l'on effectue les étapes suivantes:
E1: chargement de l'information N₀, le bit de poids faible de N₀ étant égal à 1 dans un premier et un troisième registre de Bt bits,
E2: chargement d'un 1 sur le bit de poids fort d'un deuxième registre de Bt bits,
E3: mise en oeuvre d'une boucle, indicée par i, i variant de 1 à Bt-1, chaque itération comprenant les étapes suivantes:
   B1: on décale après avoir effectué le test de l'étape B2 le contenu du premier registre de une unité vers la droite,
   B2: on teste le deuxième bit de poids le plus faible du premier registre :
      T1: si le bit testé est égal à 1, alors on décale le contenu du deuxième registre d'une unité vers la droite et on charge un 0 sur le bit de poids fort,
      T2: si le bit testé est égal à 0, alors on décale le contenu du deuxième registre d'une unité vers la droite et on charge un 1 sur le bit de poids fort, on additionne bit à bit le contenu des premier et troisième registres dans un additionneur, une sortie de l'additionneur étant reliée à une entrée du premier registre, une sortie du troisième registre étant bouclée sur son entrée,
E4: le deuxième registre contient le paramètre J₀ désiré.

L'invention sera mieux comprise, et d'autres particularités et avantages apparaîtront dans la description ci-après lue conjointement aux dessins annexés, dans lesquels:
- la figure 1 représente un circuit de cryptage dans lequel intervient le paramètre de calcul J₀
- la figure 2 représente schématiquement un circuit permettant de mettre en oeuvre des opérations modulaires selon la méthode de Montgomery,
- la figure 3 représente un circuit mis en oeuvre dans la production du paramètre de calcul J₀ selon l'invention,
- les figures 4 et 5 représentent des registres de taille variable pouvant être utilisés pour la mise en oeuvre des procédés selon l'invention.

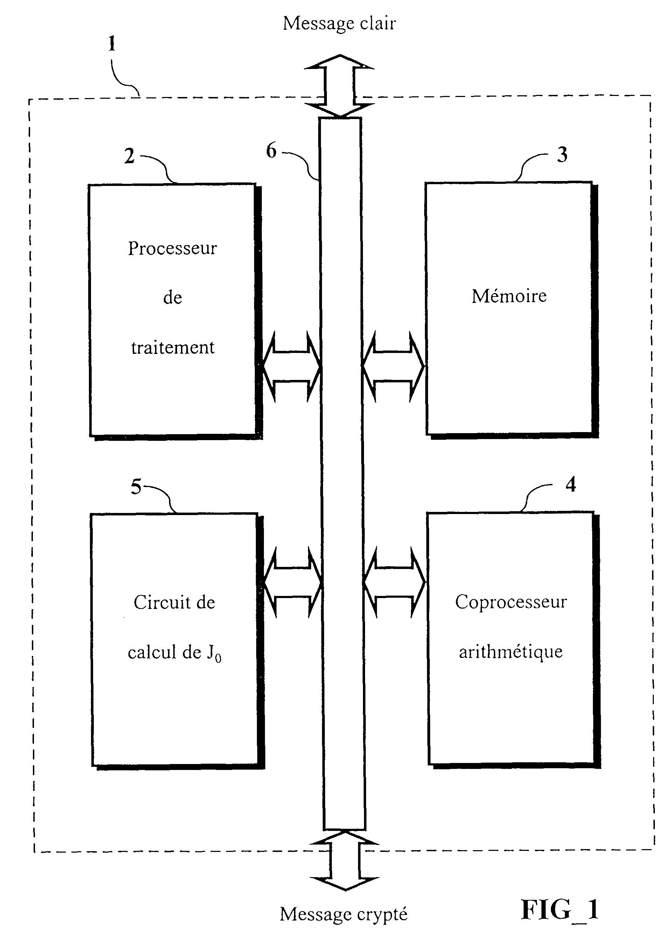

La figure 1 représente un circuit de cryptage 1 qui comporte un processeur de traitement 2, par exemple un microprocesseur 8, 16 ou 32 bits, une mémoire 3, un coprocesseur 4, un circuit dédié au calcul de J₀ 5 et un bus de communication 6. Le bus de communication 6 relie entre eux le processeur 2, la mémoire 3, le coprocesseur 4 et le circuit de calcul de J₀. Ce bus de communication 6 sert également à recevoir un message clair ou crypté qui après traitement va ressortir, après un certain temps de traitement, par ce même bus de communication 6 après avoir été crypté ou décrypté. Un tel circuit de cryptage 1 permet plusieurs possibilités de traitement. Le bus de communication 6 englobe tous les signaux qui s'échangent à l'intérieur du circuit de cryptage 1.

Une première possibilité de traitement est purement logicielle. Le processeur de traitement 2 va effectuer tous les calculs du cryptage ou du décryptage à l'aide d'un programme stocké dans la mémoire 3. Un tel traitement ne nécessite pas la présence du coprocesseur 4 et du circuit de calcul de J₀ 5 mais prend un temps de traitement considérable.

Une deuxième possibilité de traitement consiste à faire traiter tous les calculs par le coprocesseur 4, le processeur 2 ne sert qu'à contrôler le bon déroulement des opérations. Cette possibilité est très rapide mais limite le cryptage à des opérations utilisant des données compatibles avec le coprocesseur 4 et de ce fait empêche de faire certains calculs. L'utilisation d'un circuit de calcul de J₀ 5 permet d'optimiser le calcul spécifique du paramètre J₀.

Une troisième possibilité de traitement consiste à une utilisation mixte du processeur 2, du coprocesseur 4 et du circuit de calcul de J₀. Cela permet de pouvoir traiter tous les types de cryptage avec une durée inférieure à la première possibilité purement logicielle.

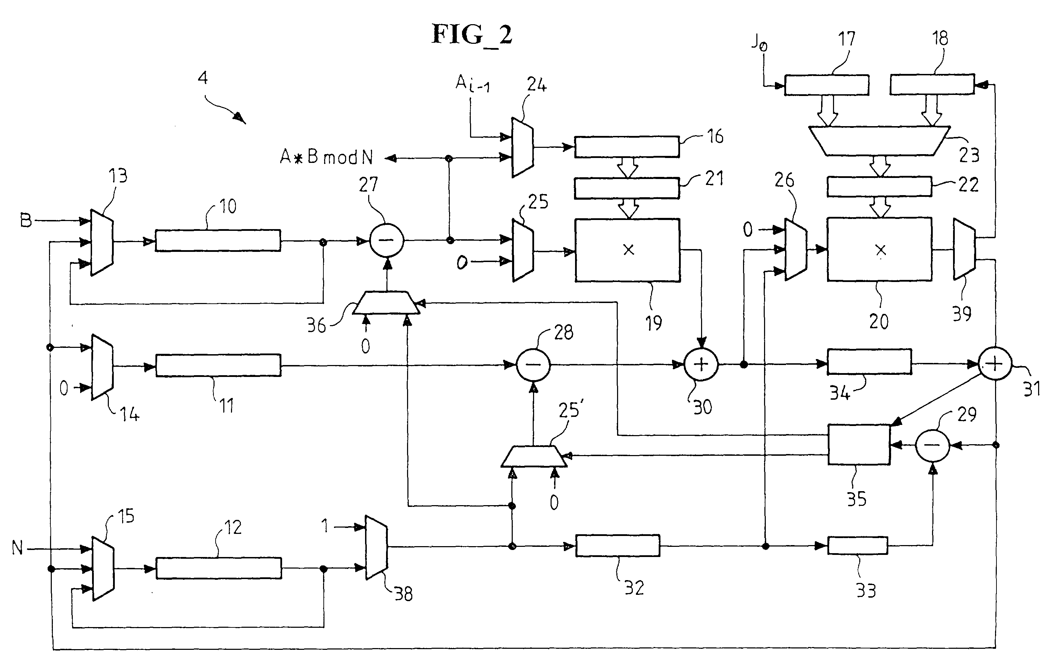

La figure 2 représente le coprocesseur 4 d'arithmétique modulaire.

Il comprend :
- trois registres à décalage 10, 11 et 12 à entrée et sortie série. Ces registres comportent chacun un même nombre n de cellules, avec n = m * Bt. Ces registres pourront être subdivisables, par exemple en registres de n/2 cellules, et en registres de Bt bits.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun Bt cellules. Les registres 16 et 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de Bt cellules. L'entrée parallèle du circuit de multiplication 20 est reliée à l'une des sorties des registres 17 ou 18, par le biais d'une bascule de mémorisation 22 de Bt cellules. Cette bascule 22 est elle-même reliée à l'une des sorties des registres 17 et 18, par le biais d'un multiplexeur 23 à deux entrées parallèles et une sortie parallèle.
- des multiplexeurs 24, 25, 25', 26, 36 et 38.
- un démultiplexeur 39.
- des circuits de soustraction série 27, 28 et 29.
- des circuits d'addition série 30 et 31.
- des circuits de retardement 32, 33 et 34 pour retarder de Bt temps de cycle la propagation de données binaires.
- un circuit 35 de stockage de résultat de comparaison.

Pour plus de détails, on pourra se reporter à la demande de brevet européen citée (EP - 0 601 907 A3), et en particulier aux passages page 15 lignes 29 à 53 et page 17 ligne 51 à page 18 ligne 54 pour avoir plus de détail sur la description du circuit.

Dans un tel circuit, lorsque l'on désire effectuer une opération P_{field} (A, B)_{N}, on procédera par exemple comme indiqué dans le brevet européen cité (EP - 0 601 907 A3) page 19 lignes. En résumé, on effectuera les étapes suivantes:
- E1: on charge les données de départ qui sont A₀, représentant les Bt bits de poids faible de A, dans le registre 16, B dans le registre 10, N dans le registre 12, J₀ qui a été calculé par un processeur de traitement 2 externe au coprocesseur 4, dans le registre 17,
- E2: Calcul de la première itération où X, Y, et Z sont des données en transit dans le coprocesseur 4, et où S est chargé dans le registre 11:
   B1: calcul de X = B * A₀,
   B2: calcul de Y = (X * J₀) mod 2^{Bt}, où l'opération mod 2^{Bt} ne correspond qu'à une troncature,
   B3: calcul de Z = X + (Y * N),
   B4: calcul de S = Z \ 2^{Bt}, où le symbole \ représente une division entière,
   B5: si S est supérieur à N alors on soustrait N à S,
- E3: Calcul des itérations suivantes ou i varie de 1 à m-1:
   B1: chargement de Aᵢ à la place de A₀,
   B2: calcul de X = S + (B * Aᵢ),
   B3: calcul de Y = (X * J₀) mod 2^{Bt}, où l'opération mod 2^{Bt} ne correspond qu'à une troncature,
   B4: calcul de Z = X + (Y * N),
   B5: calcul de S(i) = Z \ 2^{Bt}, où le symbole \ représente une division entière,
   B6: si S(i) est supérieur à N alors on soustrait N à S(i),
- E4: A la dernière itération, S est chargé dans le registre 10.

Pour plus de détails, on se reportera au brevet européen citée (EP - 0 601 907 A3) et plus particulièrement aux passages page 2 ligne 42 à page 6 ligne 17 et page 19 lignes 1 à 49.

Comme on peut le constater, J₀ est calculé de manière externe au coprocesseur. Pour remplacer un calcul logiciel relativement lent, l'invention propose un circuit 5 dédié entre autre au calcul de J₀.

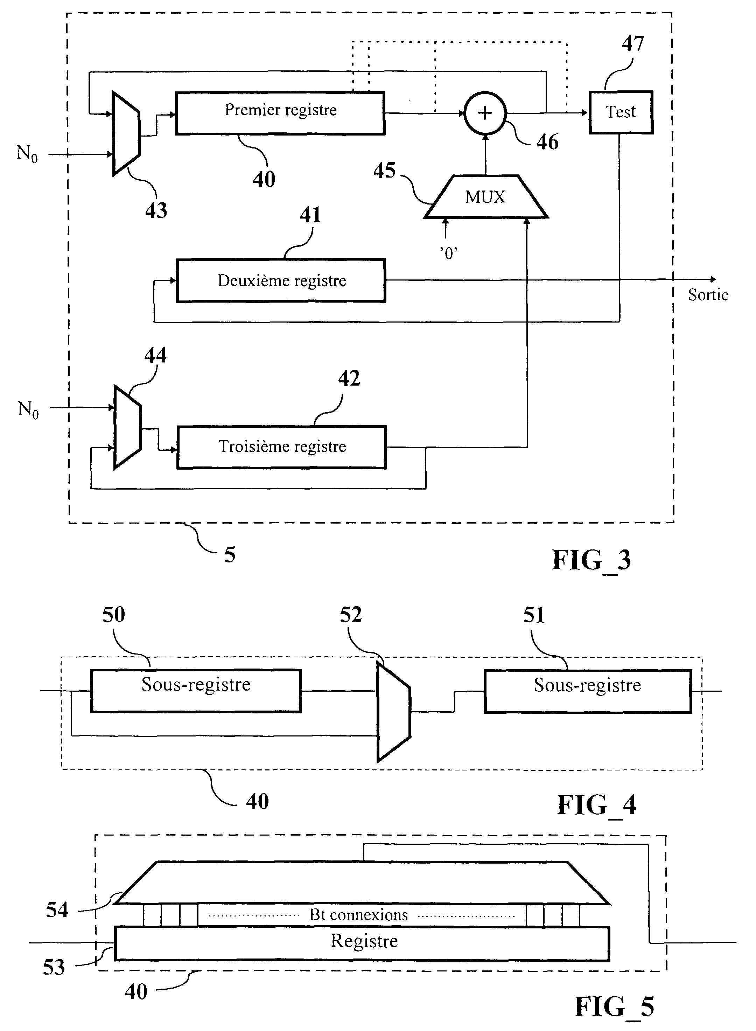

Une réalisation préférée de ce circuit 5 est visible figure 3 et il comporte entre autre: un premier, un deuxième et un troisième registre à décalage 40, 41 et 42 de Bt bits ayant chacun une entrée série et une sortie série, trois multiplexeurs 43, 44 et 45 ayant chacun une première et une deuxième entrée et une sortie, un additionneur 46 ayant une première et une deuxième entrée série et une sortie série et un circuit de test 47 ayant une entrée et une sortie.

Ces différents éléments sont reliés entre eux comme suit: le premier registre 40 a son entrée reliée à la sortie du multiplexeur 43, le premier registre 40 a sa sortie reliée à la première entrée de l'additionneur 46, le deuxième registre 41 a son entrée reliée à la sortie du circuit de test 47, le deuxième registre a sa sortie reliée à une borne de sortie, le troisième registre a son entrée reliée à la sortie du multiplexeur 44, le troisième registre a sa sortie reliée d'une part à la première entrée du multiplexeur 44 et d'autre part à la première entrée du multiplexeur 45, le multiplexeur 43 a sa première entrée reliée d'une part à la sortie de l'additionneur 46 et d'autre part à l'entrée du circuit de test 47, le multiplexeur 43 a sa deuxième entrée reliée à une première borne d'entrée, le multiplexeur 44 a sa deuxième entrée reliée à une deuxième borne d'entrée, le multiplexeur 45 a sa deuxième entrée reliée à un zéro logique (en général 0V).

Les signaux de commande des multiplexeurs et des registres ne sont pas représenté afin de clarifier le schéma de la figure 3. Les différents signaux de commande sont générés par une machine d'état facilement réalisable par l'homme de l'art après avoir lu le déroulement du procédé de production du paramètre J₀ utilisant ce circuit.

Avec un tel circuit, ou l'une de ses variantes, plusieurs séquencements sont possibles mais très peu permettent d'obtenir le calcul de J₀. Un premier procédé d'utilisation de ce circuit permettant le calcul de J₀ utilise les étapes suivantes:
E1: chargement d'une information N₀ codée sur Bt bits, le bit de poids faible de N₀ étant égal à 1, dans un premier et un troisième registre 40 et 42 de Bt bits, par l'intermédiaire des première et deuxième bornes d'entrée et par l'intermédiaire des multiplexeurs 43 et 44,
E2: on décale le contenu du deuxième registre 41 de une unité vers la droite, on charge un 1 sur le bit de poids fort de ce deuxième registre 41, on additionne bit à bit le contenu du premier registre 40 avec un zéro dans l'additionneur 46 série, la sortie de l'additionneur 46 étant reliée à l'entrée du premier registre 40, on teste le deuxième bit de poids faible à la sortie de l'additionneur 46 à l'aide du circuit de test 47,
E3: mise en oeuvre d'une boucle, indicée par i, i variant de 1 à Bt - 1, autrement dit la machine d'état qui séquencera le circuit répètera (Bt - 1) fois les étapes d'une itération de boucle, chaque itération comprenant les étapes suivantes:
   B1: on décale le contenu du premier registre 40 de une unité vers la droite, ceci correspondant à une division par deux du contenu de ce registre en oubliant le reste,
   B2: suivant le résultat du dernier test effectuer, on réalise l'une des deux opérations suivantes:
      T1: si le bit contrôlé était égal à 1, alors on décale le contenu du deuxième registre 41 de une unité vers la droite et on charge un 0, avec le circuit de test 47, sur le bit de poids fort du deuxième registre 41, on additionne bit à bit le contenu du premier registre 40 avec un zéro logique dans l'additionneur 46, la sortie de l'additionneur 46 étant reliée à l'entrée du premier registre 40, on teste le deuxième bit de poids faible à la sortie de l'additionneur 46 à l'aide du circuit de test 47,
      T2: si le bit contrôlé était égal à 0, alors on décale le contenu du deuxième registre 41 de une unité vers la droite et on charge un 1, avec le circuit de test 47, sur le bit de poids fort du deuxième registre 41, on additionne bit à bit le contenu des premier et troisième registres 40 et 42 dans un additionneur 46, une sortie de l'additionneur 46 étant reliée à l'entrée du premier registre 40, la sortie du troisième registre 42 étant bouclée sur son entrée, on teste le deuxième bit de poids faible à la sortie de l'additionneur 46 à l'aide du circuit de test 47,
E4: le deuxième registre 41 contient le paramètre J₀ désiré, on peut à présent récupérer le résultat sur la borne de sortie.

L'utilisation de ce premier procédé de calcul de J₀ n'est pas optimisé. En effet certaines étapes comportent des opérations inutiles qui visent à simplifier au maximum le séquencement du circuit. On notera cependant le temps mis pour réaliser un tel procédé, ce temps est mesuré en nombre de cycles d'horloge utilisé par le séquencement du procédé:
- les étapes E1 et E2 utilisent chacune Bt cycles d'horloge,
- l'étape E3 utilise (Bt - 1) fois les étapes B1 et B2,
- l'étape B1 utilise un cycle d'horloge,
- l'étape B2 utilise soit l'étape T1 soit l'étape T2 qui utilisent chacune Bt cycles d'horloge,
- l'étape E4 utilise Bt cycles d'horloge,
- au total, le procédé utilise 2 * Bt + (Bt - 1) * (Bt + 1) + Bt = Bt² + (3 * Bt) - 1 cycles d'horloge, en comptant l'étape E4.

Si on décide d'intégrer un tel dispositif dans un coprocesseur, par exemple du type décrit dans le brevet européen cité (EP - 0 601 907 A3), le deuxième registre 41 peut coïncider avec le registre 17, cela permet de supprimer Bt cycles d'horloge et d'obtenir le paramètre J₀ en BT² + (2 * Bt) - 1 cycles d'horloge.

Une deuxième utilisation du circuit permettant le calcul de J₀ utilise les étapes suivantes:
E1: chargement du nombre 1 représenté sur Bt bits dans un premier registre 40,
E2: chargement d'une information N₀ codée sur Bt bits, le bit de poids faible de N₀ étant égal à 1, dans un troisième registre 42 de Bt bits,
E3: mise en oeuvre d'une boucle, indicée par i, i variant de 1 à Bt, chaque itération comprenant les étapes suivantes:
   B1: suivant le résultat du dernier test effectué, on réalise l'une des deux opérations suivantes, pour la première itération on effectue T2:
      T1: si le bit de poids faible est égal à 0, alors on décale le contenu du deuxième registre 41 de une unité vers la droite et on charge un 0 sur le bit de poids fort, on additionne bit à bit le contenu du premier registre 40 avec un zéro dans l'additionneur 46, la sortie de l'additionneur 46 étant reliée à l'entrée du premier registre 40, on teste le deuxième bit de poids faible à la sortie de l'additionneur 46 à l'aide du circuit de test 47,
      T2: si le bit de poids faible est égal à 1, alors on décale le contenu du deuxième registre 41 de une unité vers la droite et on charge un 1 sur le bit de poids fort, on additionne bit à bit le contenu des premier et troisième registres 40 et 42 dans un additionneur 46, une sortie de l'additionneur 46 étant reliée à une entrée du premier registre 40, une sortie du troisième registre 42 étant bouclée sur son entrée, on teste le deuxième bit de poids faible à la sortie de l'additionneur 46 à l'aide du circuit de test 47,
   B2: on décale le contenu du premier registre 40 de une unité vers la droite ,
E4: le deuxième registre 41 contient le paramètre J₀ désiré, on peut le récupérer sur la borne de sortie.

L'utilisation de ce deuxième procédé de calcul de J₀ n'est également pas optimisé. En effet certaines étapes comportent des opérations inutiles qui visent à simplifier au maximum le séquencement du circuit. On notera cependant le temps mis pour réaliser un tel procédé, ce temps est mesuré en nombre de cycles d'horloge utilisé par le séquencement du procédé:
- les étapes E1 et E2 utilisent chacune Bt cycles d'horloge,
- l'étape E3 utilise Bt fois les étapes B1 et B2,
- l'étape B1 utilise soit l'étape T1 soit l'étape T2 qui utilisent chacune Bt cycles d'horloge,
- l'étape B2 utilise un cycle d'horloge,
- l'étape E4 utilise Bt cycles d'horloge,
- au total, le procédé utilise 2 * Bt + Bt * (Bt + 1) + Bt = Bt² + (4 + Bt) cycles d'horloge, en comptant l'étape E4.

Pour ce deuxième procédé, on peut également décider d'intégrer le dispositif dans un coprocesseur, par exemple du type décrit dans le brevet européen cité (EP - 0 601 907 A3), le deuxième registre 41 peut coïncider avec le registre 17, cela permet de supprimer Bt cycles d'horloge et d'obtenir le paramètre J₀ en BT² + (3 * Bt) cycles d'horloge. Ce deuxième procédé est légèrement plus lent que le premier procédé énoncé, on remarque toutefois que pour ce procédé, les étapes E1 et E2 peuvent être confondue ce qui permet encore d'économiser Bt cycles d'horloge.

Des améliorations peuvent être apportées en modifiant le circuit 5. Le circuit de test 47 peut avoir son entrée reliée soit à la sortie du premier registre 40 soit directement à l'un des bits du premier registre 40, comme on peut le voir en pointillés sur la figure 3. Une telle modification permet de ne plus faire d'additions du premier registre 40 avec un zéro logique, ce qui est nécessaire si on place le circuit de test 47 en sortie de l'additionneur 46. On pourra alors se limiter à effectuer, pour un premier procédé selon l'invention, les étapes suivantes dont l'ordre peut être changé:
E1: chargement d'une information N₀ codée sur Bt bits, le bit de poids faible de N₀ étant égal à 1, dans un premier et un troisième registre 40 et 42 de Bt bits,
E2: chargement d'un 1 dans le bit de poids fort d'un deuxième registre de Bt bits 41,
E3: mise en oeuvre d'une boucle, indicée par i, i variant de 1 à Bt - 1, chaque itération comprenant les étapes suivantes:
   B1: on décale le contenu du premier registre 40 de une unité vers la droite ,
   B2: on teste le bit de poids faible du premier registre 40:
      T1: si le bit de poids faible est égal à 1, alors on décale le contenu du deuxième registre 41 de une unité vers la droite et on charge un 0 sur le bit de poids fort,
      T2: si le bit de poids faible est égal à 0, alors on décale le contenu du deuxième registre 41 de une unité vers la droite et on charge un 1 sur le bit de poids fort, on additionne bit à bit le contenu des premier et troisième registres 40 et 42 dans l'additionneur 46, une sortie de l'additionneur 46 étant additionneur 46, une sortie de l'additionneur 46 étant reliée à une entrée du premier registre 40, une sortie du troisième registre 42 étant bouclée sur son entrée,
E4: le deuxième registre 41 contient le paramètre J₀ désiré, on peut le récupérer sur la borne de sortie.

Selon un deuxième mode de réalisation de l'invention, le test peut être également fait sur le deuxième bit de poids le plus faible du premier registre 40 à condition de réaliser le décalage de une unité vers la droite après avoir effectuer le test. Un tel procédé permet de réaliser le calcul du paramètre J₀ en un nombre de cycles d'horloge variable qui décomposé ainsi:
- l'étape E1 utilise Bt cycles d'horloge,
- l'étape E2 qui peut être réalisée en même temps que E1 n'utilise aucun cycle d'horloge,
- l'étape E3 réalise bt - 1 fois les étapes B1 et B2, B1 utilisant 1 cycle d'horloge et B2 utilisant 1 ou Bt cycles d'horloge,
- l'étape E4 utilise Bt cycles d'horloge.

Au total, en comptant E4, on utilise entre 4 * Bt - 2 et Bt² + (2 * Bt) - 1 cycles d'horloge. Bien entendu suivant le mode de réalisation, on peut ou non soustraire les Bt cycles d'horloge utilisés dans l'étape E4.

On pourra également modifier le deuxième procédé en se limitant aux étapes suivantes:
E1: chargement du nombre 1 représenté sur Bt bits dans un premier registre 40 de Bt bits,
E2: chargement d'une information N₀ codée sur Bt bits, le bit de poids faible de N₀ étant égal à 1, dans un troisième registre 42 de Bt bits,
E3: mise en oeuvre d'une boucle, indicée par i, i variant de 1 à Bt, chaque itération comprenant les étapes suivantes:
   B1: on teste le bit de poids faible du premier registre 40:
      T1: si le bit de poids faible est égal à 0, alors on décale le contenu du deuxième registre 41 de une unité vers la droite et on charge un 0 sur le bit de poids fort,
      T2: si le bit de poids faible est égal à 1, alors on décale le contenu du deuxième registre 41 de une unité vers la droite et on charge un 1 sur le bit de poids fort, on additionne bit à bit le contenu des premier et troisième registres 40 et 42 dans un additionneur 46, une sortie de l'additionneur 46 étant reliée à une entrée du premier registre 40, une sortie du troisième registre 42 étant bouclée sur son entrée,
   B2: on décale le contenu du premier registre 40 de une unité vers la droite ,
E4: le deuxième registre 41 contient le paramètre J₀ désiré, on peut le récupérer sur la borne de sortie.

Ici aussi, l'homme de l'art comprendra que le test peut être également fait sur le deuxième bit de poids le plus faible du premier registre 40 à condition de réaliser le décalage de une unité vers la droite après avoir effectuer le test. Ce procédé permet de réaliser le calcul du paramètre J₀ en un nombre de cycles d'horloge variable qui décomposé ainsi:
- les étapes E1 et E2 utilisent Bt cycles d'horloge que l'on ne compte qu'une seule fois,
- l'étape E3 réalise bt fois les étapes B1 et B2, B1 utilisant 1 cycle d'horloge et B2 utilisant 1 ou Bt cycles d'horloge,
- l'étape E4 utilise Bt cycles d'horloge.

Au total, en comptant E4, on utilise entre 4 * Bt et Bt² + (3 * Bt) cycles d'horloge. Bien entendu suivant le mode de réalisation, on peut ou non soustraire les Bt cycles d'horloge utilisés dans l'étape E4.

Comme on peut le constater, ce deuxième procédé, même modifié, utilise Bt + 1 cycles d'horloge de plus que le premier procédé. Il est possible de supprimer ces cycles supplémentaires en modifiant les étapes E1 et E3 comme suit:
E1: chargement de (N₀ + 1) mod 2^{Bt} dans un premier registre 40 et chargement d'un 1 en bit de poids fort dans un deuxième registre,
E3: mise en oeuvre d'une boucle indexée par un indice i, i variant de 1 à Bt - 1, chaque itération comprenant les étapes B1 et B2 définies précédemment.

Le fait d'utiliser N₀ peut apparaître comme une étape de calcul qui ne serait pas comptabilisée. Il est tout à fait possible de réaliser ce calcul en "soft" dans le processeur de traitement 2 tout en effectuant le chargement des données N₀ et N₀ + 1. Si le processeur de traitement est peu performant et ne permet pas ces traitements simultanés, il est alors possible à l'homme du métier de rajouter un additionneur série supplémentaire entre une borne d'entrée et le multiplexeur 43, l'addition s'effectuant simultanément avec le chargement sans rajouter de délais supplémentaire.

Classiquement les bases de calcul utilisées sont de 32 bits, cela revient dans l'invention à utiliser des registres de Bt = 32 bits. Il est fort possible d'avoir prochainement des circuits utilisant des bases de calcul de taille supérieure par exemple 64 bits. L'invention propose donc d'utiliser des registres de taille variable comme décrit figure 4. La figure 4 montre un registre 40, qui pourrait être le registre 41 ou 42 qui est décomposé en deux sous-registres à décalage 50 et 51 de Bt bits ayant chacun une entrée et une sortie série, un multiplexeur 52 ayant une première entrée reliée à la sortie du registre 50, une deuxième entrée reliée à l'entrée du registre 50 et une sortie reliée à l'entrée du registre 51. Un tel dispositif se comporte comme un registre à décalage 40 ayant son entrée confondue avec l'entrée du registre 50 et sa sortie confondue avec la sortie du registre 51. Cependant suivant la commande du multiplexeur, le registre à décalage 40 aura une taille variant de Bt ou de 2 * Bt bits. L'homme de l'art n'aura aucun mal à imaginer un registre découpé en trois, quatre ou plus de sous-registres.

Une autre possibilité utilisant une taille de registre variable est possible. Cette possibilité est applicable sur les registre 40 et 42. On a vu dans les procédé de production de J₀ que l'on effectue jusqu'à Bt additions sur Bt bits. Or chaque addition effectuée nécessite en réalité un calcul sur un bit de moins que la précédente. On a donc imaginé un calcul utilisant des registres de taille variable pendant le déroulement du procédé. Le troisième registre 42 constitué comme décrit précédemment à ceci près qu'il est constitué de Bt sous-registres de un bit et donc de Bt-1 multiplexeurs. le premier registre 40 est constitué d'un registre 53 de Bt bits ayant une entrée série et une sortie parallèle, et d'un multiplexeur 54 ayant Bt entrées reliées à la sortie parallèle du registre 53. Le registre 40 ayant en fait comme entrée série, l'entrée série du registre 53 et comme sortie série la sortie du multiplexeur 54. l'utilisation de tels registres permet de remplacer le décalage de une unité vers la droite du contenu du premier registre 40 par une décrémentation de la taille des registres 40 et 42. Cela a pour effet de supprimer un cycle d'horloge à chaque itération de la boucle par rapport à la précédente. On obtient alors les nombres de cycles suivant:
- pour le premier procédé détaillé (Bt² / 2) + (2 * Bt) - 2 en comptant l'étape E4,
- pour le deuxième procédé détaillé (Bt² / 2) + (3,5 * Bt) en comptant l'étape E4,
- pour le troisième procédé détaillé (Bt² / 2) + Bt - 1 en comptant l'étape E4,
- pour le quatrième procédé détaillé (Bt² / 2) + (3,5 * Bt) en comptant l'étape E4,

On notera que pour les troisième et quatrième procédés, il s'agit du nombre maximal cycles d'horloge utilisés, le nombre minimal de cycle ne variant pas.

Quelque soit le circuit utilisé, il est préférable de l'intégrer sur un coprocesseur, par exemple le coprocesseur 4. Une première possibilité a déjà été envisagée précédemment, elle consistait à substituer le deuxième registre 41 de l'invention au registre 17 du coprocesseur 4.

Une deuxième possibilité est d'utiliser un maximum d'éléments du coprocesseur 4. On peut par exemple utiliser le registre 10 comme premier registre 40 et le registre 12 comme troisième registre 42 à condition d'avoir des registre 10 et 12 de taille variable. Il sera facile à l'homme de l'art de comprendre comment les multiplexeurs 13, 15, 36 et 18 se substituent aux multiplexeurs 43, 44 et 45. Il faut remplacer le circuit de soustraction 27 par un circuit capable d'effectuer aussi bien des additions que des soustractions pour avoir la fonctionnalité de l'additionneur 46. Enfin il faut substituer le registre 17 au deuxième registre 41. Pour pouvoir réaliser la fonctionnalité du calcul de J₀, il ne manque plus qu'un circuit de test 47 qui aura sa sortie connectée à l'entrée du registre 17 et son entrée connectée à un des bits du registre 10, il manque également une connexion entre la sortie du circuit d'addition/soustraction qui remplace le circuit de soustraction 27 et une quatrième entrée du multiplexeur 13.

## Revendications

1. Procédé de production dans un coprocesseur d'arithmétique modulaire d'un circuit intégré d'un paramètre J₀ associé à la mise en oeuvre d'opération modulaire selon la méthode de Montgomery, le coprocesseur comportant des registres à décalage de Bt et de k*Bt bits (10 à 12, 16 à 18), des circuits d'addition et de soustraction série (27 à 31), un circuit de test (35) et d'autres moyens pour réaliser des opérations modulaires selon la méthode de Montgomery, caractérisé en ce que J₀ étant codé sur Bt bits et tel que ((J₀*N₀)+1)mod 2 ^{Bt} = 0, N₀ étant une information codée sur Bt bits, et en ce que l'on effectue les étapes suivantes:
E1: chargement de l'information N₀, le bit de poids faible de N₀ étant égal à 1, dans un premier et un troisième registre (40 et 42) de Bt bits,
E2: chargement d'un 1 sur le bit de poids fort d'un deuxième registre (41) de Bt bits,
E3: mise en oeuvre d'une boucle, indicée par i, i variant de 1 à Bt - 1, chaque itération comprenant les étapes suivantes:
B1: on décale le contenu du premier registre (40) de une unité vers la droite ,
B2: on teste le bit de poids le plus faible du premier registre (40):
T1: si le bit testé est égal à 1, alors on décale le contenu du deuxième registre (41) de une unité vers la droite et on charge un 0 sur le bit de poids fort,
T2: si le bit testé est égal à 0, alors on décale le contenu du deuxième registre (41) de une unité vers la droite et on charge un 1 sur le bit de poids fort, on additionne bit à bit le contenu des premier et troisième registres (40 et 42) dans un additionneur (46), une sortie de l'additionneur (46) étant reliée à une entrée du premier registre (40), une sortie du troisième registre (42) étant bouclée sur son entrée,
E4: le deuxième registre (41) contient le paramètre J₀ désiré.

2. Procédé de production dans un coprocesseur d'arithmétique modulaire d'un circuit intégré d'un paramètre J₀ associé à la mise en oeuvre d'opération modulaire selon la méthode de Montgomery, le coprocesseur comportant des registres à décalage de Bt et de k*Bt bits (10 à 12, 16 à 18), des circuits d'addition et de soustraction série (27 à 31), un circuit de test (35) et d'autres moyens pour réaliser des opérations modulaires selon la méthode de Montgomery, caractérisé en ce que J₀ étant codé sur Bt bits et tel que ((J₀*N₀)+1)mod 2 ^{Bt} = 0, N₀ étant une information codée sur Bt bits, et en ce que l'on effectue les étapes suivantes:
E1: chargement de l'information N₀, le bit de poids faible de N₀ étant égal à 1, dans un premier et un troisième registre (40 et 42) de Bt bits,
E2: chargement d'un 1 sur le bit de poids fort d'un deuxième registre (41) de Bt bits,
E3: mise en oeuvre d'une boucle, indicée par i, i variant de 1 à Bt - 1, chaque itération comprenant les étapes suivantes:
B1: on décale après avoir effectué le test de l'étape B2 le contenu du premier registre (40) de une unité vers la droite ,
B2: on teste le deuxième bit de poids le plus faible du premier registre (40):
T1: si le bit testé est égal à 1, alors on décale le contenu du deuxième registre (41) de une unité vers la droite et on charge un 0 sur le bit de poids fort de ce deuxième registre,
T2: si le bit testé est égal à 0, alors on décale le contenu du deuxième registre (41) de une unité vers la droite et on charge un 1 sur le bit de poids fort, on additionne bit à bit le contenu des premier et troisième registres (40 et 42) dans un additionneur (46), une sortie de l'additionneur (46) étant reliée à une entrée du premier registre (40), une sortie du troisième registre (42) étant bouclée sur son entrée,
E4: le deuxième registre (41) contient le paramètre J₀ désiré.

3. Procédé selon la revendication 2, caractérisé en ce que le test effectué pendant l'étape B2 est réalisé avec le bit de poids 2¹ de l'addition précédente au test.

4. Procédé selon l'une revendication 1 à 3, caractérisé en ce que, dans la première alternative T1 du test, on effectue, en outre, une addition bit à bit du contenu du premier registre (40) avec un zéro dans l'additionneur (46), la sortie de l'additionneur (46) étant relié à l'entrée du premier registre (40)

5. Procédé selon la revendication 4, caractérisé en ce que l'étape est la suivante :
E2: on décale le contenu du deuxième registre (41) de une unité vers la droite, on charge un 1 sur le bit de poids fort, on additionne bit à bit le contenu du premier registre (40) avec un zéro dans l'additionneur (46), la sortie de l'additionneur (46) étant reliée à l'entrée du premier registre (40).

6. Procédé selon l'une des revendications 1 à 5, caractérisé en ce que les premier, deuxième et troisième registres (40, 41, 42) sont munis de plusieurs multiplexeurs (52, 54) permettant d'avoir une taille variable.

7. Procédé selon la revendication 6, caractérisé en ce que la taille des premier et troisième registres (40 et 42) diminue pendant la production du paramètre J₀

## Patentansprüche

1. Verfahren zur Erzeugung eines Parameters J₀ in einem Koprozessor mit modularer Arithmetik einer integrierten Schaltung zur Durchführung einer modularen Operation nach der Montgomery-Methode, wobei der Koprozessor Schieberegister mit Bt und k * Bt Bits (10 bis 12, 16 bis 18), serielle Additions- und Subtraktionsschaltungen (27 bis 31), eine Testschaltung (35) und weitere Einrichtungen zum Ausführen modularer Operationen nach der Montgomery-Methode umfaßt,
dadurch gekennzeichnet, daß
J₀ auf Bt Bits codiert ist und somit
((J₀ * N₀) + 1) mod 2 ^{Bt} = 0 gilt, wobei N₀ eine auf Bt Bits codierte Information ist, und daß folgende Schritte ausgeführt werden:
E1: Laden der Information N₀ in ein erstes und ein drittes Register (40 und 42) mit Bt Bits, wobei das Bit von N₀ mit geringem Gewicht gleich 1 ist,
E2: Laden einer 1 auf das Bit mit großem Gewicht eines zweiten Registers (41) mit Bt Bits,
E3: Ausführen einer mit dem Index i bezeichneten Schleife, mit i zwischen 1 und Bt - 1, wobei jede Iteration die folgenden Schritte aufweist:
B1: Der Inhalt des ersten Registers (40) wird um eine Einheit nach rechts verschoben,
B2: das Bit mit dem geringsten Gewicht des ersten Registers (40) wird getestet:
T1: ist das getestete Bit gleich 1, wird der Inhalt des zweiten Registers (41) um eine Einheit nach rechts verschoben und eine 0 in das Bit mit großem Gewicht geladen,
T2: ist das getestete Bit gleich 0, wird der Inhalt des zweiten Registers (41) um eine Einheit nach rechts verschoben und eine 1 in das Bit mit großem Gewicht geladen, der Inhalt des ersten und des dritten Registers (40 und 42) werden in einem Addierer (46) bitweise addiert, wobei ein Ausgang des Addierers (46) an einen Eingang des ersten Registers (40) angeschlossen ist und ein Eingang des dritten Registers (42) mit seinem Eingang zur Schleife geschaltet ist,
E4: das zweite Register (41) enthält den gewünschten Parameter J₀.

2. Verfahren zur Erzeugung eines Parameters J₀ in einem Koprozessor mit modularer Arithmetik einer integrierten Schaltung zur Durchführung einer modularen Operation nach der Montgomery-Methode,
dadurch gekennzeichnet, daß
J₀ auf Bt Bits codiert ist und somit
((J₀ * N₀) + 1) mod 2 ^{Bt} = 0 gilt, wobei N₀ eine auf Bt Bits codierte Information ist, und daß folgende Schritte ausgeführt werden:
E1: Laden der Information N₀ in ein erstes und ein drittes Register (40 und 42) mit Bt Bits, wobei das Bit mit geringem Gewicht von N₀ gleich 1 ist,
E2: Laden einer 1 auf das Bit mit großem Gewicht eines zweiten Registers (41) mit Bt Bits,
E3: Ausführen einer mit dem Index i bezeichneten Schleife, mit i zwischen 1 und Bt - 1, wobei jede Iteration die folgenden Schritte aufweist:
B1: nach der Durchführung des Tests beim Schritt 32 wird der Inhalt des ersten Registers (40) um eine Einheit nach rechts verschoben,
B2: das zweite Bit mit dem geringsten Gewicht des ersten Registers (40) wird getestet:
T1: ist das getestete Bit gleich 1, wird der Inhalt des zweiten Registers (41) um eine Einheit nach rechts verschoben, und eine 0 wird in das Bit mit großem Gewicht des zweiten Registers geladen,
T2: ist das getestete Bit gleich 0, wird der Inhalt des zweiten Registers (41) um eine Einheit nach rechts verschoben, und eine 1 wird in das Bit mit großem Gewicht geladen, der Inhalt des ersten und des dritten Registers (40 und 42) wird in einem Addierer (46) bitweise addiert, wobei ein Ausgang des Addierers (46) an einen Eingang des ersten Registers (40) angeschlossen ist und wobei ein Ausgang des dritten Registers (42) mit seinem Eingang zur Schleife geschaltet ist,
E4: das dritte Register (41) enthält den gewünschten Parameter J₀.

3. Verfahren nach Anspruch 2, dadurch gekennzeichnet, daß der während des Schrittes B2 durchgeführte Test mit dem Bit mit der Wertigkeit 2¹ der dem Test voranstehenden Addition durchgeführt wird.

4. Verfahren nach einem der Ansprüche 1 bis 3, dadurch gekennzeichnet, daß in einer ersten Alternative T1 des Testes darüber hinaus im Addierer (46) eine bitweise Addition des Inhalts des ersten Registers (40) mit einer Null durchgeführt wird, wobei der Ausgang des Addierers (46) mit dem Eingang des ersten Registers (40) verbunden ist.

5. Verfahren nach Anspruch 4, dadurch gekennzeichnet, daß der Schritt der folgende ist:
E2: der Inhalt des zweiten Registers (41) wird um eine Einheit nach rechts verschoben, eine 1 wird auf das Bit mit großem Gewicht geladen, der Inhalt des ersten Registers (40) wird bitweise im Addierer (46) zu einer Null addiert, wobei der Ausgang des Addierers (46) mit dem Eingang des ersten Registers (40) verbunden ist.

6. Verfahren nach einem der Ansprüche 1 bis 5, dadurch gekennzeichnet, daß die ersten, zweiten und dritten Register (40, 41, 42) mehrere Multiplexer (52, 54) aufweisen, die eine variable Größe haben können.

7. Verfahren nach Anspruch 6, dadurch gekennzeichnet, daß die Größe des ersten und des dritten Registers (40 und 42) während der Erzeugung des Parameters J₀ abnimmt.

## Claims

1. Method of producing, in a modular arithmetic coprocessor of an integrated circuit, a parameter J₀ associated with the implementation of a modular operation according to the Montgomery method, the coprocessor having shift registers of Bt and k*Bt bits (10 to 12, 16 to 18), addition circuits and serial subtraction circuits (27 to 31), a test circuit (35) and other means for performing modular operations according to the Montgomery method, characterised in that, J₀ being coded in Bt bits and such that ((J₀*N₀)+1) mod 2^{Bt} = 0, N₀ being an item of information coded in Bt bits, and in that the following steps are performed:
E1: loading the information N₀, the least significant bit of N₀ being equal to 1, into first and third registers (40 and 42) of Bt bits,
E2: loading a 1 on the most significant bit of a second register (41) of Bt bits,
E3: implementing a loop, indexed by i, i varying from 1 to Bt - 1, each iteration comprising the following steps:
B1: the content of the first register (40) is shifted by one unit to the right,
B2: the least significant bit of the first register (40) is tested:
T1: if the bit tested is equal to 1, then the content of the second register (41) is shifted by one unit to the right and a 0 is loaded on the most significant bit,
T2: if the bit tested is equal to 0, then the content of the second register (41) is shifted by one unit to the right and a 1 is loaded on the most significant bit, the content of the first and third registers (40 and 42) is added bitwise in an adder (46), an output of the adder (46) being connected to an input of the first register (40), an output of the second register (42) being looped back onto its input,
E4: The second register (41) contains the required parameter J₀.

2. Method of producing, in a modular arithmetic coprocessor of an integrated circuit, a parameter J₀ associated with the implementation of a modular operation according to the Montgomery method, the coprocessor having shift registers of Bt and k*Bt bits (10 to 12, 16 to 18), addition circuits and serial subtraction circuits (27 to 31), a test circuit (35) and other means for performing modular operations according to the Montgomery method, characterised in that, J₀ being coded in Bt bits and such that ((J₀*N₀)+1) mod 2^{Bt} = 0, N₀ being an item of information coded in Bt bits, and in that the following steps are performed:
E1: loading the information N₀, the least significant bit of N₀ being equal to 1, into first and third registers (40 and 42) of Bt bits,
E2: loading a 1 on the most significant bit of a second register (41) of Bt bits,
E3: implementing a loop, indexed by i, i varying from 1 to Bt - 1, each iteration comprising the following steps:
B1: after having performed the test of step B2, the content of the first register (40) is shifted by one unit to the right,
B2: the second least significant bit of the first register (40) is tested:
T1: if the bit tested is equal to 1, then the content of the second register (41) is shifted by one unit to the right and a 0 is loaded on the most significant bit in this second register,
T2: if the bit tested is equal to 0, then the content of the second register (41) is shifted by one unit to the right and a 1 is loaded on the most significant bit, the content of the first and third registers (40 and 42) is added bitwise in an adder (46), an output of the adder (46) being connected to an input of the first register (40), an output of the second register (42) being looped back onto its input,
E4: The second register (41) contains the required parameter J₀.

3. Method according to Claim 2, characterised in that the test performed during step B2 is carried out with the bit of weight 2¹ from the addition preceding the test.

4. Method according to one of Claims 1 to 3, characterised in that, in the first alternative T1 of the test, there is also performed a bitwise addition of the content of the first register (40) with a zero in the adder (46), the output of the adder (46) being connected to the input of the first register (40).

5. Method according to Claim 4, characterised in that the step is as follows:
E2: the content of the second register (41) is shifted by one unit to the right, a 1 is loaded on the most significant bit, the content of the first register (40) is added bitwise with a zero in the adder (46), the output of the adder (46) being connected to the input of the first register (40).

6. Method according to one of Claims 1 to 5, characterised in that the first, second and third registers (40, 41, 42) are provided with several multiplexers (52, 54) making it possible to have a variable size.

7. Method according to Claim 6, characterised in that the size of the first and third registers (40 and 42) decreases during the production of the parameter J₀.
